# EUROPEAN PATENT APPLICATION

(11) **EP 2 117 249 A1**
(43) Date of publication of application: **11.11.2009**
(21) Application number: 07707818.6
(22) Date of filing: 31.01.2007
(51) Int. Cl.: H04Q 7/38, H04B 7/26

(54) **MOBILE STATION, MOBILE COMMUNICATION SYSTEM, AND METHOD FOR CONTROLLING TRANSMISSION TIMING IN MOBILE STATION**

(71) Applicant: Fujitsu Limited, Kawasaki-shi, Kanagawa 211-8588 (JP)
(72) Inventor: SATOU, Hideyori, Kawasaki-shi Kanagawa 211-8588 (JP)
(74) Representative: Holtby, Christopher Lawrence
(86) International application number: PCT/JP2007/051632
(87) International publication number: WO 2008/093416

(57) **Abstract**

A mobile station, a mobile communication system comprising the mobile station and a base transceiver station, and a transmission timing control method in a mobile station, controlling a transmission timing of transmission data sent to the base transceiver station so as to cancel a difference between a first elapsed time comprising a difference between a transmission timing of first data transmitted from the base transceiver station (56) and a reception timing when the first data arrives at the mobile station (50) and the second elapsed time comprising a difference between a transmission timing of second data transmitted from the base transceiver station after the transmission of the first data and a reception timing when the second data arrives at the mobile station, whereby effective use of the wireless band becomes possible by controlling the transmission timing of data from the mobile station without using a control channel, the measurement of the reception timing at the base transceiver station becomes unnecessary, and recognition of the control channel by the base transceiver station becomes unnecessary, thereby allowing for reduction of processing time in the base transceiver station, shorter control, and reduction of the length of guard interval in frames.

## Description

### CROSS-REFERENCE TO RELATED APPLICATION

This application is a continuation application based on International application No. PCT/JP2007/051632, filed on January 31, 2007, the contents being incorporated herein by reference.

### TECHNICAL FIELD

The present invention relates to a mobile station, a mobile communication system, and a transmission timing control method in a mobile station, more particularly relates to a mobile communication system comprising a plurality of mobile stations communicating with a single base transceiver station which controls the transmission timing of data from the mobile stations to the base transceiver station in the mobile communication system and a transmission timing control method in a mobile station for the same.

### BACKGROUND ART

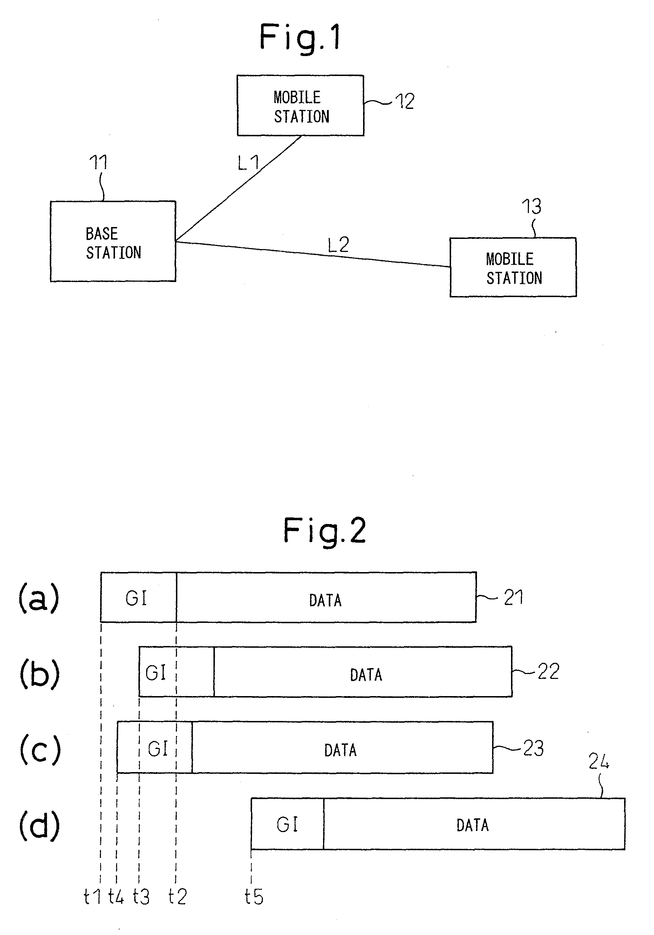

FIG. 1 is a block diagram illustrating an example of the configuration of a conventional mobile communication system including a base transceiver station and a plurality of mobile stations. In FIG. 1, the distance between the base transceiver station 11 and a mobile station 12 is L1, and the distance between the base transceiver station 11 and a mobile station 13 is L2. The distances L1 and L2 are not necessarily the same. On the other hand, if data transmitted from each mobile station to the base transceiver station is not received within a constant time interval in the base transceiver station, the data will become noise. This is referred to as "mobile-to-mobile interference". The mobile-to-mobile interference is explained using FIGS. 2(a) to (d).

FIGS. 2(a) to (d) are views illustrating the configurations and the transmission timings of the transmission frames transmitted from mobile stations. Each transmission frame comprises a guard interval GI at the head and comprises data afterwards. The guard interval GI is an interval in which there is no data. If there is even a part of a guard interval GI of a frame from a different mobile station in that interval when received at the base transceiver station, the base transceiver station can receive that frame, but if there is no guard interval GI of a frame from another mobile station at all in this interval, that frame cannot be received and the data becomes noise.

For example, as illustrated in FIG. 2(A), assume the timing of the head of the guard interval GI of the frame 21 arriving from the first mobile station to the base transceiver station is t1 and the timing of the end is t2. Further, assume the timing of the head of the guard interval GI of the frame 22 arriving from the second mobile station to the base transceiver station is t3 as illustrated in FIG. 2(b), the timing of the head of the guard interval GI of the frame 23 arriving from the third mobile station to the base transceiver station is t4 as illustrated in FIG. 2(c), and the timing of the head of the guard interval GI of the frame 24 arriving from the fourth mobile station to the base transceiver station is t5 as illustrated in FIG. 2(d). As illustrated, the timings of the heads of the guard intervals GI of the second and third frames are between the timings t1 and t2 of the guard interval GI of the first frame, therefore the base transceiver station can receive the frames 21 to 23 without interference, however, the timing t5 of the head of the guard interval GI of the frame 24 is not between the timings t1 and t2 of the guard interval GI of the first frame, thus the data in the frame 24 is discarded as noise.

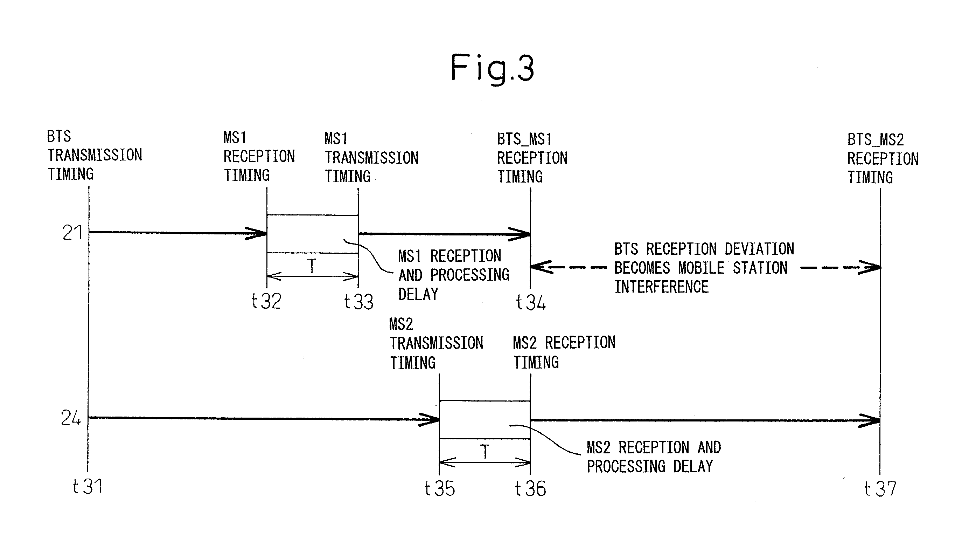

FIG. 3 is a time chart explaining a case where the reception timings of two frames at the base transceiver station are offset such as with the frame 21 illustrated in FIG. 2(a) and the frame 24 illustrated in FIG. 2(d). In FIG. 3, the frame 21 is transmitted from the base transceiver station BTS at the timing t31 and is received at the timing t32 at the mobile station MS1 where it is given the necessary processing for a constant processing time T. The processed frame is transmitted at the timing t33 toward the base transceiver station BTS and arrives at the timing T34 at the base transceiver station BTS. On the other hand, the frame 24 is transmitted from the base transceiver station BTS at the timing t31 and is received at the timing t35 at the mobile station MS2 where it is given the necessary processing for a constant processing time T. The processed frame is transmitted at the timing t36 toward the base transceiver station BTS and arrives at the timing T37 at the base transceiver station BTS. When the positions of the mobile stations from the base transceiver station BTS are different in this manner, the time for the frames transmitted from these mobile stations to arrive at the base transceiver station will differ significantly. As a result, there is no period in which the guard intervals GI of two frames overlap, therefore the base transceiver station deems either the frame 21 or the frame 24 to be noise and discards it. This discard of frames is referred to as "mobile-to-mobile interference".

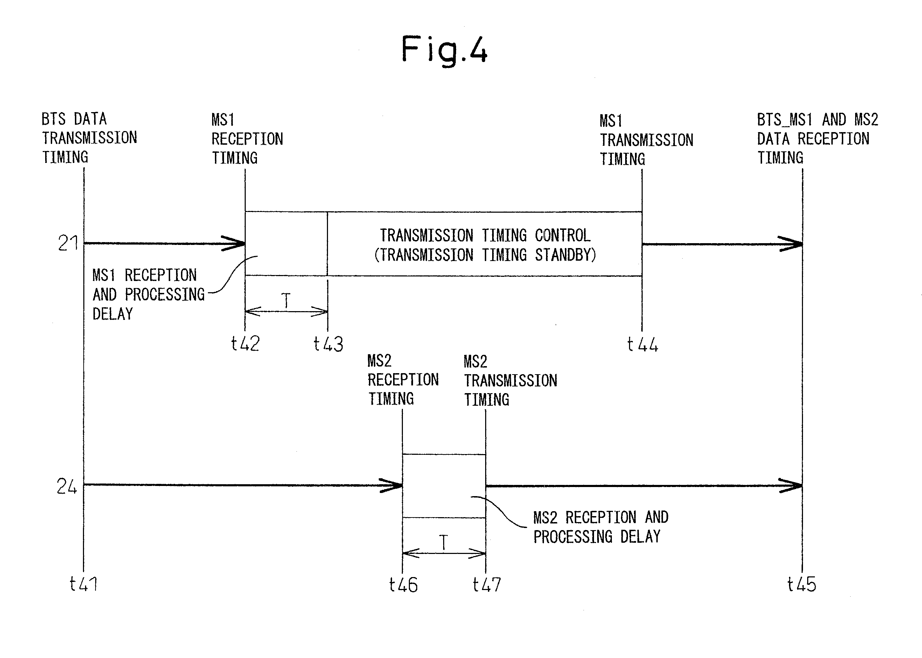

FIG. 4 is a time chart explaining a conventional method for controlling the transmission timings of mobile stations by a base transceiver station. In FIG. 4, the frame 21 is transmitted from the base transceiver station BTS at the timing t41 and is received at the timing t42 at the mobile station MS1 where it is given the necessary processing for a constant processing time T. The processed frame is kept on standby for transmission from t43 to t44 under the control of the base transceiver station BTS, the processed frame is transmitted toward the base transceiver station BTS at the timing t44, and the frame arrives at the timing T45 at the base transceiver station BTS. On the other hand, the frame 24 is transmitted from the base transceiver station BTS at the timing t41 and is received at the timing t46 at the mobile station MS2 where it is given the necessary processing for a constant processing time T. The processed frame is transmitted at the timing t47 toward the base transceiver station BTS without being kept on standby for transmission under the control of the base transceiver station BTS and arrives at the timing T45 at the base transceiver station BTS. The base transceiver station BTS controls the transmission timing standby time so that frames from the mobile stations MS1 and MS2 arrive at the base transceiver station BTS simultaneously. By such control, mobile-to-mobile interference is eliminated.

Patent Document 1: Japanese Laid-Open Patent Publication No. 11-275057

### DISCLOSURE OF THE INVENTION

### PROBLEMS TO BE SOLVED BY THE INVENTION

According to the conventional method illustrated in FIG. 4, a region for controlling the transmission timing is provided in the control channel of the frame from the mobile station to the base transceiver station. The base transceiver station must control each mobile station using this region. There is the problem that control complex becomes complicated for the base transceiver station.

Further, the base transceiver station measures the data reception timing from each mobile station and controls each mobile station, therefore when a mobile station is moving at a high speed, even if making it stand by for exactly transmission timing standby time under the control of the base transceiver station, the guard intervals of two frames will not necessarily overlap at the base transceiver station. In this case, there is the problem that mobile-to-mobile interference cannot be avoided. If the period of the guard interval is made longer, the mobile-to-mobile interference will be lessened, however, the length of the data in the frame will be shortened by exactly the extent by which the guard interval is lengthened and therefore the communication efficiency becomes poorer.

An object of the present invention, in consideration of the above problems in prior art, is to shorten the processing time in the base transceiver station and shorten the length of the guard interval in the frame so as to thereby effectively utilize frames based on the concept of controlling the transmission timing according to the reception timing of a mobile station rather than by control from the base transceiver station.

### MEANS FOR SOLVING THE PROBLEMS

To achieve the aforementioned object, according to a first aspect of the present invention, there is provided a mobile station controlling a transmission timing of transmission data toward a base transceiver station so as to cancel a difference between a first elapsed time comprised of a difference between a transmission timing of first data transmitted from the base transceiver station and a reception timing when the first data arrives at the mobile station and a second elapsed time comprised of a difference between a transmission timing of second data transmitted from the base transceiver station after transmission of the first data and a reception timing when the second data arrives at the mobile station.

According to a second aspect of the present invention, there is provided a mobile station provided with a base transceiver station-guided transmission timing control portion using a control channel within received data for control of a transmission timing of data to a base transceiver station controlled guided by the base transceiver station when it is judged that the mobile station is currently moving at a predetermined speed or less and a mobile station-guided transmission timing control portion performing control of the transmission timing of data to the base transceiver station controlled guided by the mobile station when it is judged that the mobile station is currently moving at a speed faster than the predetermined speed, the mobile station-guided transmission timing control portion controlling the transmission timing of transmission data sent toward the base transceiver station so as to cancel a difference between a first elapsed time comprised of a difference between a transmission timing of first data transmitted from the base transceiver station and a reception timing when the first data arrives at the mobile station and a second elapsed time comprised of a difference between a transmission timing of second data transmitted from the base transceiver station after transmission of the first data and a reception timing when the second data arrives at the mobile station.

According to a third aspect of the present invention, there is provided a mobile communication system provided with a mobile station transmitting and receiving data with a base transceiver station transmitting and receiving data, wherein the mobile station controls a transmission timing of transmission data toward a base transceiver station so as to cancel a difference between a first elapsed time comprised of a difference between a transmission timing of first data transmitted from the base transceiver station and a reception timing when the first data arrives at the mobile station and a second elapsed time comprised of a difference between a transmission timing of second data transmitted from the base transceiver station after transmission of the first data and a reception timing when the second data arrives at the mobile station.

According to a fourth aspect of the present invention, there is provided a mobile communication system provided with a mobile station transmitting and receiving data with a base transceiver station transmitting and receiving data, the mobile station provided with a base transceiver station-guided transmission timing control portion using a control channel within received data for control of a transmission timing of data to a base transceiver station controlled guided by the base transceiver station when it is judged that the mobile station is currently moving at a predetermined speed or less and a mobile station-guided transmission timing control portion performing control of the transmission timing of data to the base transceiver station controlled guided by the mobile station when it is judged that the mobile station is currently moving at a speed faster than the predetermined speed, the mobile station-guided transmission timing control portion controlling the transmission timing of transmission data sent toward the base transceiver station so as to cancel a difference between a first elapsed time comprised of a difference between a transmission timing of first data transmitted from the base transceiver station and a reception timing when the first data arrives at the mobile station and a second elapsed time comprised of a difference between a transmission timing of second data transmitted from the base transceiver station after transmission of the first data and a reception timing when the second data arrives at the mobile station.

According to a fifth aspect of the present invention, there is provided a mobile station transmission timing control method controlling a transmission timing of transmission data toward a base transceiver station so as to cancel a difference between a first elapsed time comprised of a difference between a transmission timing of first data transmitted from the base transceiver station and a reception timing when the first data arrives at the mobile station and a second elapsed time comprised of a difference between a transmission timing of second data transmitted from the base transceiver station after transmission of the first data and a reception timing when the second data arrives at the mobile station.

According to a sixth aspect of the present invention, there is provided a transmission timing control method in a mobile station provided with base transceiver station-guided transmission timing control step using a control channel within received data for control of a transmission timing of data to a base transceiver station controlled guided by the base transceiver station when it is judged that the mobile station is currently moving at a predetermined speed or less and a mobile station-guided transmission timing control step performing control of the transmission timing of data to the base transceiver station controlled guided by the mobile station when it is judged that the mobile station is currently moving at a speed faster than the predetermined speed, the mobile station-guided transmission timing control step controlling the transmission timing of transmission data sent toward the base transceiver station so as to cancel a difference between a first elapsed time comprised of a difference between a transmission timing of first data transmitted from the base transceiver station and a reception timing when the first data arrives at the mobile station and a second elapsed time comprised of a difference between a transmission timing of second data transmitted from the base transceiver station after transmission of the first data and a reception timing when the second data arrives at the mobile station.

In each of these aspects, the first reception timing is the timing at which a pilot signal inserted in any of the channels of the first data is received by a mobile station, and the second reception timing is the timing at which a pilot signal inserted in any of the channels of the second data is received by a mobile station.

In each of these aspects, the transmission timing of the first data and transmission timing of the second data may be acquired based on the transmission timing of the data transmitted from the base transceiver station at constant time intervals.

Instead of basing the transmission timing of the first data and transmission timing of the second data on the data transmitted at constant time intervals from the base transceiver station as explained above, the transmission timing of the first data and transmission timing of the second data may be a transmission timing of the first data and a transmission timing of the second data transmitted by the base transceiver station based on a GPS signal, that is, may be acquired based on a GPS signal.

### EFFECTS OF THE INVENTION

A wireless band can be effectively utilized by controlling the transmission timing of the data from a mobile station without using a control channel.
Further, because the transmission timing of data is controlled from the mobile station by the reception timing of the data in the mobile station and not by control from the base transceiver station, the measurement of the reception timing at the base transceiver station is no longer necessary. Further, the base transceiver station no longer has to recognize the control channel, thereby cutting down the processing time in the base transceiver station, making control in a short period of time possible, and making the shortening of the length of the guard interval in the frame possible.

### BRIEF DESCRIPTION OF THE DRAWINGS

[FIG. 1] is a block diagram illustrating an example of the configuration of a conventional mobile communication system including a base transceiver station and a plurality of mobile stations.
[FIG. 2] gives views illustrating the configurations of transmission frames transmitted from a mobile station and the transmission timings of the same.
[FIG. 3] is a time chart explaining a case when the reception timings of the base transceiver station for two frames are offset.
[FIG. 4] is a time chart explaining a conventional method for controlling the transmission timing of a mobile station by a base transceiver station.
[FIG. 5] is a block diagram illustrating the configuration of a mobile communication system according to a first embodiment of the present invention.
[FIG. 6] is a flow chart explaining the operation of a mobile station 50 illustrated in FIG. 5.
[FIG. 7] is a block diagram illustrating the configuration of a mobile communication system according to a second embodiment of the present invention.
[FIG. 8] is a flow chart explaining the operation of a mobile station 70 illustrated in FIG. 7.

### BEST MODE

Referring to the following drawings, embodiments of the present invention will be explained.

### First Embodiment

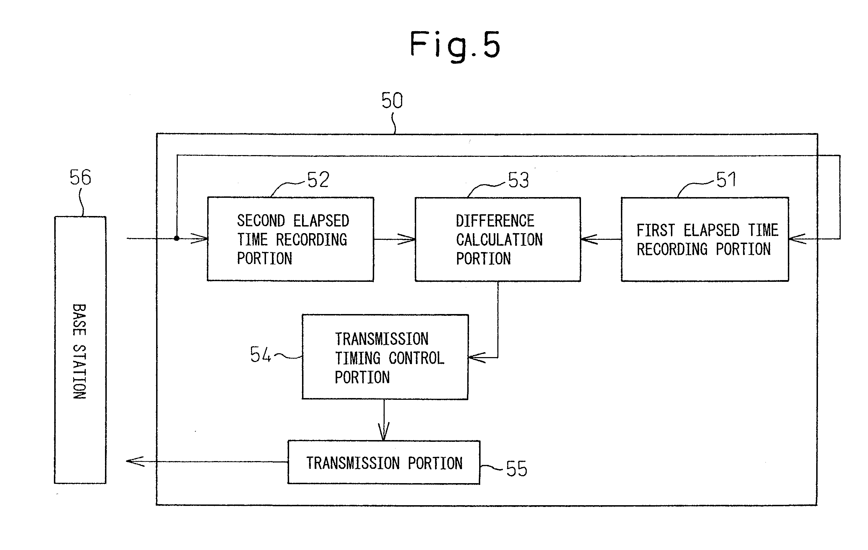

FIG. 5 is a block diagram illustrating the configuration of a mobile communication system according to a first embodiment of the present invention. In FIG. 5, a mobile station 50 is provided with a first elapsed time recording portion 51 recording a first elapsed time comprised of a difference between a transmission timing of first data (previous frame) transmitted wirelessly from a base transceiver station 56 and a reception timing when the first data arrives at the mobile station 50, a second elapsed time recording portion 52 recording a second elapsed time comprised of a difference between a transmission timing of second data (current frame) transmitted wirelessly from the base transceiver station 56 after the transmission of the first data and a reception timing when the second data arrives at the mobile station, a difference calculation portion 53 calculating a difference between the first elapsed time and second elapsed time, a transmission timing control portion 54 controlling transmission timing of the transmission data sent to the base transceiver station 56 so that the difference is cancelled, and a transmission portion 55 transmitting data controlled in transmission timing by the transmission timing control portion 54 to the base transceiver station 56.

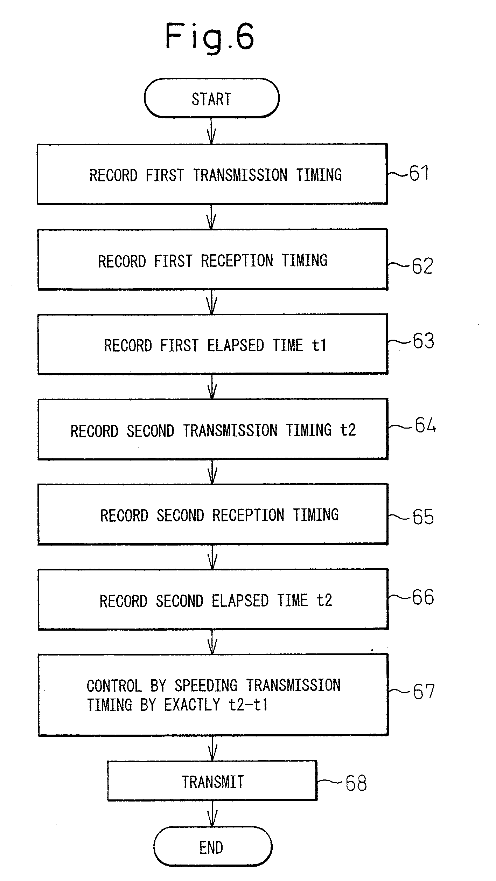

FIG. 6 is a flow chart explaining the operation of the mobile station 50 illustrated in FIG. 5. In FIG. 6, at step 61, the transmission timing of the first data transmitted from the base transceiver station 56 is recorded in a not shown memory or the first elapsed time recording portion 51, at step 62, the reception timing of the first data is recorded in a not shown memory or the first elapsed time recording portion 51, and at step 63, a first elapsed time t1 comprised of a difference between the first reception timing and the first transmission timing is recorded in the first elapsed time recording portion 51. The first elapsed time t1 is the time elapsed from the transmission of the first data from the base transceiver station 56 to its arrival at the mobile station 50.

Similarly, at step 64, the transmission timing of the second data transmitted from the base transceiver station 56 is recorded in a not shown memory or the second elapsed time recording portion 52 after the transmission of the first data, at step 65, the reception timing of the second data is recorded in a not shown memory or the second elapsed time, and at step 66, a second elapsed time t2 comprised of a difference between the second reception timing and the second transmission timing is recorded in the second elapsed time recording portion 52. The second elapsed time t2 is the time elapsed from the transmission of the second data from the base transceiver station 56 to its arrival at the mobile station 50.

Next, at step 67, the transmission timing of the data from the mobile station 50 is controlled so that the transmission timing is speeded up by exactly t2-t1. Next, at step 68, the data is sent to the base transceiver station 56 at a controlled transmission timing.

By controlling the transmission timing of the data transmitted from the mobile station in such a way, in the base transceiver station 56, all the data from the mobile station will be able to be received nearly simultaneously, whereby guard intervals will overlap, and discard of data such as explained in FIG. 2A to FIG. 2D can be avoided.

Further, if the time taken for measurement of the reception timing is the same between the case of measurement guided by the base transceiver station and the case of measurement guided by the mobile station, the first embodiment 1 is capable of faster control in comparison with the prior art of control guided by the base transceiver station by exactly the RTT (round trip time).

For example, when a mobile station 50 begins to move toward a point B after having stopped at a certain point A, in the past, the control information would not reach the terminal side if the RTT had not elapsed since movement began, however this first embodiment 1 has the advantage of being able to begin control at the point in time when movement has begun.

Further, in the prior art, a time slot considering the possible distance of movement by the RTT was the control range, but in the first embodiment, a time slot considering the possible distance of movement by the measurement time of the reception timing is the control range, thus the transmission timing can be controlled with a higher degree of control than the prior art.

### Second Embodiment

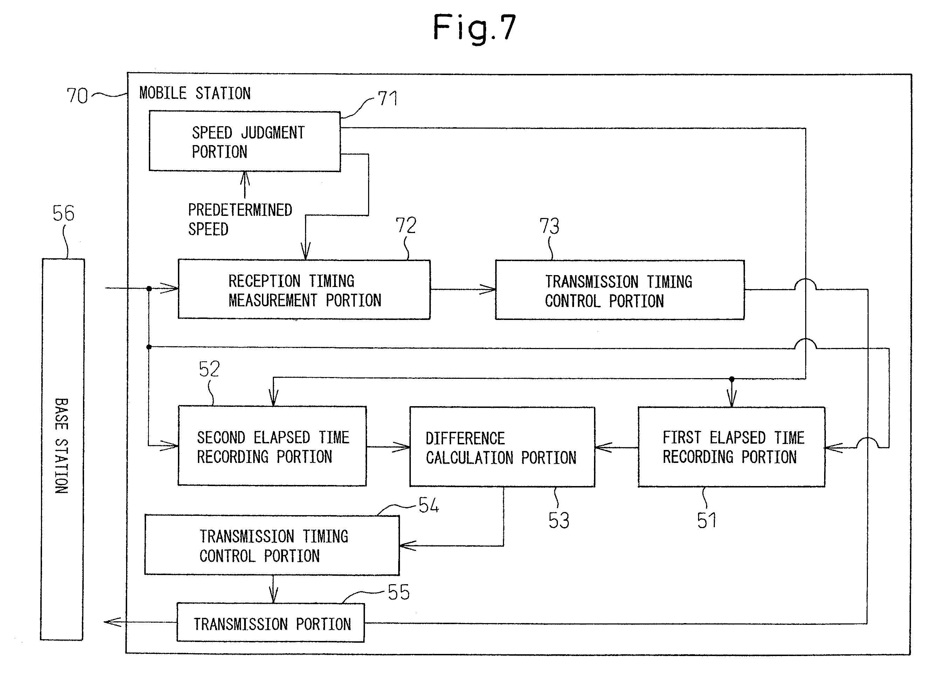

FIG. 7 is a block diagram illustrating the configuration of a mobile communication system according to a second embodiment of the present invention. In FIG. 7, the same parts are assigned the same notations as in FIG. 5. In the second embodiment, the mobile station 70 is further provided with a speed judgment portion 71 judging whether the movement speed of the mobile station 70 is a predetermined speed or less and a reception timing measurement portion 72 and transmission timing control portion 73 for controlling the transmission timing guided by the base transceiver station in the same way as the prior art when the predetermined speed or less and controls the transmission timing guided by the mobile station which had been performed in the first embodiment only when the movement speed of the mobile station 70 is greater than the predetermined speed. Here, the "predetermined speed" is a speed that is slower by the effect of the overlap of the guard interval of the data transmitted from the mobile station to the base transceiver station with the guard interval of other data.

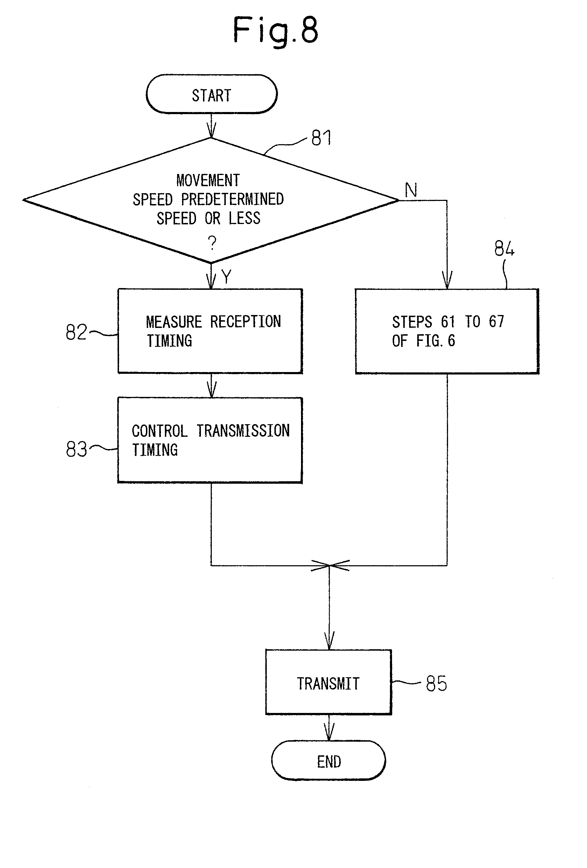

FIG. 8 is a flow chart explaining the operation of the mobile station 70 illustrated in FIG. 7. In FIG. 8, at step 81, the speed judgment portion 71 judges if the movement speed of the mobile station 70 is the predetermined speed or less. If the predetermined speed or less, at step 82, the reception timing measurement portion 72 measures the reception timing of the data, and at step 83, the conventional transmission timing control explained in FIG. 4 is performed under the control of the base transceiver station 56.

When the movement speed of the mobile station 70 is greater than the predetermined speed at step 81, the same operation is performed at step 84 as at step 61 to 67 of FIG. 6 so that the transmission timing is controlled guided by the mobile station.

At step 85, data is transmitted to the base transceiver station at the transmission timing controlled led by the base transceiver station or by the mobile station.

Due to this second embodiment as well, the base transceiver station 56 can simultaneously receive data from all of the mobile stations almost simultaneously, so effects similar to the first embodiment can be achieved.

In any of the embodiments, the first reception timing is the timing at which a pilot signal inserted into any of the channels of the first data is received by a mobile station, and the second reception timing is the timing at which a pilot signal inserted into any of the channels of the second data is received by a mobile station.

Further, the transmission timing of the first data and transmission timing of the second data may be acquired based on the transmission timing of data transmitted from the base transceiver station at constant time intervals.

Instead of this, the transmission timing of the first data and transmission timing of the second data may be a transmission timing of the first data and a transmission timing of the second data transmitted by the base transceiver station based on a GPS signal, that is, may be acquired based on a GPS signal.

When a handoff occurs in a mobile station at a different base transceiver station area, the operation illustrated in FIG. 6 or FIG. 8 may be performed based on the data from the base transceiver station with the higher received signal strength.

### INDUSTRIAL APPLICABILITY

According to the present invention, a mobile station can control the transmission timing without using a control channel, so effective use of the wireless band is possible. Further, the transmission timing of the data from the mobile station is controlled by the reception timing of the mobile station and not from the base transceiver station, so measurement of the reception timing at the base transceiver station becomes unnecessary. Further, it is no longer necessary to recognize the control channel, so the processing time in the base transceiver station can be shortened, shorter control can be performed, and the length of the guard interval in the frame can be shortened.

## Claims

1. A mobile station **characterized in that** it comprises:
a first elapsed time recording portion recording a first elapsed time comprised of a difference between a transmission timing of first data transmitted from a base transceiver station and a reception timing when said first data arrives at the mobile station;
a second elapsed time recording portion recording a second elapsed time comprising a difference between a transmission timing of second data transmitted from the base transceiver station after the transmission of said first data and a reception timing when said second data arrives at the mobile station;
a difference calculation portion calculating a difference between said first elapsed time and said second elapsed time;
a transmission timing control portion controlling a transmission timing of data being transmitted to said base transceiver station so as to cancel said difference; and
a transmission portion transmitting the data controlled in transmission timing by said transmission timing control portion to said base transceiver station.

2. The mobile station as set forth in claim 1, wherein said first reception timing is a timing in which a pilot signal inserted into any of the channels in said first data is received by said mobile station, and said second reception timing is a timing in which a pilot signal inserted into any of the channels of said second data is received by said mobile station.

3. The mobile station as set forth in claim 1, wherein the transmission timing of said first data and the transmission timing of said second data are acquired based on a transmission timing of data transmitted from said base transceiver station at constant time intervals.

4. The mobile station as set forth in claim 1, wherein the transmission timing of said first data and the transmission timing of said second data is the transmission timing of said first data and the transmission timing of said second data transmitted by said base transceiver station based on a GPS signal, that is, is acquired based on said GPS signal.

5. A mobile station **characterized in that** it comprises:
a speed judgment portion judging if a mobile station is currently moving at a predetermined speed or less;
a base transceiver station-guided transmission timing control portion using a control channel within the received data and controlling the transmission timing of data to said base transceiver station controlled guided by the base transceiver station when said speed judgment portion judges that said mobile station is currently moving at said predetermined speed or less; and
a mobile station-guided transmission timing control portion controlling the transmission timing of data to said base transceiver station controlled guided by the mobile station when said speed judgment portion judges that said mobile station is currently moving at a speed faster than said predetermined speed; wherein
said mobile station-guided transmission timing control portion comprises:
a first elapsed time recording portion recording a first elapsed time comprised of a difference between the transmission timing of said first data transmitted from said base transceiver station and the reception timing when said first data arrives at the mobile station;
a second elapsed time recording portion recording a second elapsed time comprising a difference between a transmission timing of second data transmitted from the base transceiver station after the transmission of said first data and a reception timing when said second data arrives at the mobile station;
a difference calculation portion calculating a difference between said first elapsed time and said second elapsed time;
a transmission timing control portion controlling a transmission timing of data being transmitted to said base transceiver station so as to cancel said difference; and
a transmission portion transmitting the data controlled in transmission timing by said transmission timing control portion to said base transceiver station.

6. The mobile station as set forth in claim 5, wherein said first reception timing is a timing at which a pilot signal inserted in any of the channels in said first data is received by said mobile station, and said second reception timing is a timing at which a pilot signal inserted in any of the channels of said second data is received by said mobile station.

7. The mobile station as set forth in claim 5, wherein the transmission timing of said first data and the transmission timing of said second data are acquired based on a transmission timing of data transmitted from said base transceiver station at constant time intervals.

8. The mobile station as set forth in claim 5, wherein the transmission timing of said first data and the transmission timing of said second data is the transmission timing of said first data and the transmission timing of said second data transmitted by said base transceiver station based on a GPS signal, that is, is acquired based on said GPS signal.

9. A mobile communication system **characterized in that** it comprises:
a base transceiver station transmitting and receiving data; and
a mobile station transmitting and receiving data with said base transceiver station;
said mobile station comprising:
a first elapsed time recording portion recording a first elapsed time comprising a difference between the transmission timing of said first data transmitted from said base transceiver station and the reception timing when said first data arrives at the mobile station;
a second elapsed time recording portion recording a second elapsed time comprising a difference between a transmission timing of second data transmitted from the base transceiver station after the transmission of said first data and a reception timing when said second data arrives at the mobile station;
a difference calculation portion calculating a difference between said first elapsed time and said second elapsed time;
a transmission timing control portion controlling a transmission timing of data being transmitted to said base transceiver station so as to cancel said difference; and
a transmission portion transmitting the data controlled in transmission timing by said transmission timing control portion to said base transceiver station.

10. A mobile communication system **characterized in that** it comprises:
a base transceiver station transmitting and receiving data; and
a mobile station transmitting and receiving data with said base transceiver station; wherein
said mobile station comprises:
a speed judgment portion judging if a mobile station is currently moving at a predetermined speed or less;
a base transceiver station-guided transmission timing control portion using a control channel within the received data and controlling the transmission timing of data to said base transceiver station controlled guided by the base transceiver station when said speed judgment portion judges that said mobile station is currently moving at said predetermined speed or less; and
a mobile station-guided transmission timing control portion controlling the transmission timing of data to said base transceiver station controlled guided by the mobile station when said speed judgment portion judges that said mobile station is currently moving at a speed faster than said predetermined speed; wherein
said mobile station-guided transmission timing control portion comprises:
a first elapsed time recording portion recording a first elapsed time until arrival of said first data transmitted from said base transceiver station at said mobile station from said base transceiver station;
a second elapsed time recording portion recording a second elapsed time until arrival of said second data transmitted from said base transceiver station after transmission of said first data at said mobile station from said base transceiver station;
a difference calculation portion calculating a difference between said first elapsed time and said second elapsed time;
a transmission timing control portion controlling the transmission timing of data being transmitted to said base transceiver station so as to cancel said difference; and
a transmission portion transmitting the data controlled in transmission timing by said transmission timing control portion to said base transceiver station.

11. A transmission timing control method **characterized in that** it comprises:
a first elapsed time recording step recording a first elapsed time comprised of a difference between the transmission timing of said first data transmitted from said base transceiver station and the reception timing when said first data arrives at the mobile station;
a second elapsed time recording step recording a second elapsed time comprising a difference between a transmission timing of second data transmitted from the base transceiver station after the transmission of said first data and a reception timing when said second data arrives at the mobile station;
a difference calculation step calculating a difference between said first elapsed time and said second elapsed time;
a transmission timing control step controlling a transmission timing of data being transmitted to said base transceiver station so as to cancel said difference; and
a transmission step transmitting the data controlled in transmission timing by said transmission timing control portion to said base transceiver station.

12. The transmission timing control method in a mobile station as set forth in claim 11, wherein said first reception timing is a timing a which a pilot signal inserted in any of the channels in said first data is received by said mobile station, and said second reception timing is a timing at which a pilot signal inserted in any of the channels of said second data is received by said mobile station.

13. The transmission timing control method in a mobile station as set forth in claim 11, wherein the transmission timing of said first data and the transmission timing of said second data are acquired based on a transmission timing of data transmitted from said base transceiver station at constant time intervals.

14. The transmission timing control method in a mobile station as set forth in claim 11, wherein the transmission timing of said first data and the transmission timing of said second data is the transmission timing of said first data and the transmission timing of said second data transmitted by said base transceiver station based on a GPS signal, that is, is acquired based on said GPS signal.

15. A transmission timing control method in a mobile station, **characterized in that** the method comprises:
a judgment step judging if the mobile station is currently moving at a predetermined speed or less;
a base transceiver station-guided transmission timing control step using a control channel within the received data to control the transmission timing of data to said base transceiver station controlled guide by the base station when it is judged that said mobile station is currently moving at said predetermined speed or less; and
a mobile station-guided transmission timing control step controlling the transmission timing of data to said base transceiver station controlled guided by said mobile station when it is judged by said speed judgment portion that said mobile station is currently moving at a speed faster than said predetermined speed; wherein
said mobile station-guided transmission timing control step comprises:
a first elapsed time recording step recording a first elapsed time until arrival of said first data transmitted from said base transceiver station at said mobile station from said base transceiver station;
a second elapsed time recording step recording a second elapsed time until arrival of said second data transmitted from said base transceiver station after transmission of said first data at said mobile station from said base transceiver station;
a difference calculation step calculating a difference between said first elapsed time and said second elapsed time;
a transmission timing control step controlling a transmission timing of data being transmitted to said base transceiver station so as to cancel said difference; and
a transmission step transmitting the data controlled in transmission timing by said transmission timing control portion to said base transceiver station.

16. The transmission timing control method in a mobile station as set forth in claim 15, wherein said first reception timing is a timing at which a pilot signal inserted in any of the channels in said first data is received by said mobile station, and said second reception timing is a timing at which a pilot signal inserted in any of the channels of said second data is received by said mobile station.

17. The transmission timing control method in a mobile station as set forth in claim 15, wherein the transmission timing of said first data and the transmission timing of said second data are acquired based on a transmission timing of data transmitted from said base transceiver station at constant time intervals.

18. The transmission timing control method in a mobile station as set forth in claim 15, wherein the transmission timing of said first data and the transmission timing of said second data is the transmission timing of said first data and the transmission timing of said second data transmitted by said base transceiver station based on a GPS signal, that is, is acquired based on said GPS signal.
